# EUROPEAN PATENT APPLICATION

(11) **EP 4 693 708 A1**
(43) Date of publication of application: **11.02.2026**
(21) Application number: 24930258.9
(22) Date of filing: 03.06.2024
(51) Int. Cl.: H01M 50/552

(54) **HIGH-HEAT-RESISTANCE BATTERY CELL COVER PLATE STRUCTURE AND LITHIUM BATTERY**

(30) Priority: 21.03.2024 CN 202420571891 U
(71) Applicant: Hefei Gotion High-Tech Power Energy Co., Ltd., Hefei, Anhui 230012 (CN)
(72) Inventor: LIANG, Mengtian, Hefei, Anhui 230012 (CN); JU, Linrun, Hefei, Anhui 230012 (CN); GUI, Junjie, Hefei, Anhui 230012 (CN)
(74) Representative: Sun, Yiming
(86) International application number: PCT/CN2024/096965
(87) International publication number: WO 2025/194594

(57) **Abstract**

The utility model relates to the field of new energy power batteries, and provides a battery cell cover plate structure with high heat resistance and a lithium battery. The battery cell cover plate structure with high heat resistance includes: a top cover plate; a terminal located on a side of the top cover plate; a ceramic supporting ring, supported between the terminal and the top cover plate, and at least partially surrounding an end of the terminal close to the top cover plate to prevent the terminal from moving toward the top cover plate; and a ceramic limiting ring, arranged spaced apart from the ceramic supporting ring, and at least partially surrounding an end of the terminal away from the top cover plate to prevent the terminal from moving away from the top cover plate; and a fixing assembly, connected to the top cover plate, and at least partially surrounding the ceramic supporting ring and the ceramic limiting ring to fix the ceramic supporting ring, the ceramic limiting ring, and the terminal to the top cover plate. According to the utility model, the terminal structure of the cover plate is simplified and improved. A specially designed ceramic ring is used to limit and mount an electrode pole, where the ceramic supporting ring and the ceramic limiting ring are arranged spaced apart from each other, which can facilitate processing and mounting, and improve supporting performance.

## Description

### TECHNICAL FIELD

The utility model relates to the field of new energy power batteries, and in particular, to a battery cell cover plate structure with high heat resistance and a lithium battery.

### BACKGROUND

Lithium batteries, which have characteristics such as a high energy density, absence of a memory effect, a long single-cell cycle life, high efficiency, cleanliness, and no pollution generation, are widely applied to portable electronic products such as mobile phones, notebook computers, and digital cameras, and demonstrate promising application in fields such as electric vehicles. Especially in recent years, with the vigorous development of the new energy vehicle industry, the new energy vehicle power battery technology sector achieved significant and effective development.

A square power lithium-ion battery is composed of a winding core, a housing, and a cover plate. The cover plate is provided with a hole and equipped with a terminal assembly. The cover plate provides a function of a lead-out component of a pore piece of the winding core, and needs to further provide functions such as sealing, insulation, and high-temperature stability. Design of a terminal assembly structure of a lithium-ion battery is crucial to safety performance of a battery. To ensure insulation performance of a cover plate, current market designs predominantly utilize a polyphenylene sulfide (PPS) material for an insulating member in a terminal assembly structure, which exhibits a heat deformation temperature of 260°C, with a temperature for long-term use typically confined to a range of 220-240°C. An extremely high temperature situation may occur during service of a power lithium-ion battery, for example, a temperature inside the battery may exceed 250°C during thermal runaway, in which case an insulating member structure in the prior art fails to satisfy a demand for insulation performance. Therefore, a new battery cell cover plate structure with high heat resistance is urgently needed, so as to ensure high-temperature stability of the structure of the insulating member of the terminal assembly.

### SUMMARY

### 1. Problems to be resolved

In view of a problem in the prior art that an insulating member made of a polyphenylene sulfide (PPS) material mounted to a terminal of a battery cover plate fails to maintain stable insulation performance at a high temperature, the utility model provides a battery cell cover plate structure with high heat resistance. A specific battery terminal structure is used, a terminal connection structure is redesigned and simplified, which can ensure high-temperature stability of the structure of the insulating member of the terminal assembly.

### 2. Technical solutions

To resolve the foregoing problem, the following technical solutions are used in the utility model.

A battery cell cover plate structure with high heat resistance includes a top cover plate provided with an electrode lead-out hole, and further includes:
a terminal, located on a side of the top cover plate and covering the electrode lead-out hole;
a ceramic supporting ring, supported between the terminal and the top cover plate, and at least partially surrounding an end of the terminal close to the top cover plate to prevent the terminal from moving toward the top cover plate;
a ceramic limiting ring, arranged spaced apart from the ceramic supporting ring, and at least partially surrounding an end of the terminal away from the top cover plate to prevent the terminal from moving away from the top cover plate; and
a fixing assembly, connected to the top cover plate, and at least partially surrounding the ceramic supporting ring and the ceramic limiting ring to fix the ceramic supporting ring, the ceramic limiting ring, and the terminal to the top cover plate.

According to the battery cell cover plate structure with high heat resistance of the utility model, the terminal structure of the cover plate terminal is simplified and improved. A specially designed ceramic ring is used to limit and mount an electrode pole, where the ceramic supporting ring and the ceramic limiting ring are arranged spaced apart from each other, which can facilitate processing and mounting, improve supporting performance, ensure insulation performance at a joint of the terminal structure, improve sealing performance, and ensure high-temperature stability of the terminal structure.

Further, the ceramic supporting ring includes a base portion supported between the top cover plate and the terminal, and a cylinder portion surrounding a peripheral side of the terminal. Preferably, the terminal includes a columnar body and a flange portion facing the top cover plate, and the ceramic limiting ring includes a radial limiting portion surrounding a peripheral side of the columnar body and an axial limiting portion surrounding the flange portion.

In some possible embodiments, the fixing assembly includes:
a limiting member, where the limiting member is connected to the top cover plate, and at least partially surrounds the ceramic supporting ring and the ceramic limiting ring to confine relative positions of the ceramic supporting ring, the ceramic limiting ring, and the terminal on the top cover plate; and
a fixing member, where the fixing member is connected to the top cover plate, and at least partially surrounds the limiting member to fix the limiting member, the ceramic supporting ring, the ceramic limiting ring, and the terminal to the top cover plate.

Further, a primary sink having a small diameter and a secondary sink having a large diameter are sequentially provided on a side of the top cover plate facing the terminal, and the ceramic supporting ring is arranged on a bottom of the primary sink. The limiting member includes an annular substrate arranged on the bottom of the primary sink, and an extension extending and wrapping outer peripheral walls of the ceramic supporting ring and the ceramic limiting ring, and an outer peripheral wall of the annular substrate is connected to an inner side wall of the primary sink through welding. The fixing member is formed through an insulative injection molding process, and has a filling portion filled in a gap between an inner side wall of the secondary sink and an outer peripheral wall of the limiting member. The fixing member extends and wraps the limiting member and the ceramic limiting ring from the filling portion thereof to an outer peripheral wall of the terminal.

In addition, to improve sealing performance at a connection structure of an electrode pole, a sealing member is further arranged between the terminal and the top cover plate. The sealing member includes a cylindrical portion wrapping an inner side wall of the electrode lead-out hole, and an annular portion filled between the terminal and the top cover plate.

A lithium battery, including a housing having at least at one open end, where a battery core is arranged in the housing, and the foregoing battery cell cover plate structure with high heat resistance is arranged at the opening of the housing.

Apparently, elements or features described in the foregoing individual implementations may be used alone or in combination.

### 3. Beneficial effects

Compared with the prior art, the utility model has the following beneficial effects:
(1) According to the battery cell cover plate structure with high heat resistance provided in the utility model, the terminal structure of the cover plate terminal is simplified and improved. A specially designed ceramic ring is used to limit and mount an electrode pole, where the ceramic supporting ring and the ceramic limiting ring are arranged spaced apart from each other, which can facilitate processing and mounting, improve supporting performance, ensure insulation performance at a joint of the terminal structure, improve sealing performance, and ensure high-temperature stability of the terminal structure.
(2) According to the battery cell cover plate structure with high heat resistance provided in the utility model, the ceramic supporting ring, the ceramic limiting ring, and the terminal can be securely mounted to the top cover plate through arrangement of the limiting member and the fixing member, and since the primary sink and the secondary sink are provided on the top cover plate, positioning can be provided during mounting of the terminal and a connection structural member, and overall compactness and stability of the battery cover plate structure are enhanced.

### BRIEF DESCRIPTION OF THE DRAWINGS

In the drawings, sizes and scales do not represent sizes and scales of actual products. The drawings are merely illustrative, and some unnecessary elements or features are omitted for clarity.
FIG. 1 is a schematic structural diagram of a joint of a terminal in a battery cell cover plate structure with high heat resistance according to Embodiment 1;
FIG. 2 is a three-dimensional view of the battery cell cover plate structure with high heat resistance according to Embodiment 1; and
FIG. 3 is a schematic structural diagram of the battery cell cover plate structure with high heat resistance according to Embodiment 1 in a top view.

### DESCRIPTION OF REFERENCE NUMERALS

1. Top cover plate; 101. Electrode lead-out hole; 102. Primary sink; 103. Secondary sink; 2. Terminal; 201. Columnar body; 202. Flange portion; 3. Ceramic supporting ring; 301. Base portion; 302. Cylinder portion; 4. Ceramic limiting ring; 401. Radial limiting portion; 402. Axial limiting portion; 5. Limiting member; 501. Annular substrate; 502. Extension; 6. Fixing member; 7. Sealing member; 701. Cylindrical portion; 702. Annular portion.

### DETAILED DESCRIPTION

The utility model is described below in detail with reference to the drawings. Descriptions herein are merely preferred implementations based on the utility model, and a person skilled in the art may conceive of other manners that can implement the utility model based on the preferred implementations, and the other manners also fall within the scope of the utility model.

### Embodiment 1

This embodiment provides a battery cell cover plate structure with high heat resistance, which is mainly applied to secondary batteries, especially lithium batteries. The battery cell cover plate structure with high heat resistance may be mounted to an opening of a battery housing, i.e., is applicable to a battery having one open end, and is also applicable of a battery having two open ends.

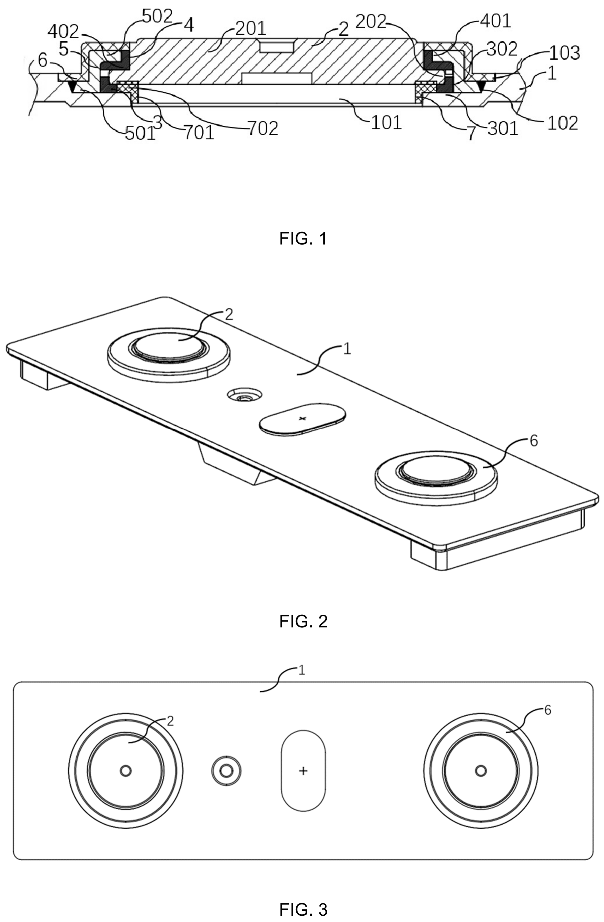

As shown in FIG. 1 to FIG. 3, the battery cell cover plate structure with high heat resistance mainly includes a top cover plate 1, a terminal 2 mounted to the cover plate, and a connection structure between the two.

An electrode lead-out hole 101 is provided on the top cover plate 1. The terminal 2 is arranged on a side of the top cover plate 1, and the terminal 2 covers the electrode lead-out hole 101. Specifically, one electrode lead-out hole 101 may be provided on the top cover plate 1 to mount a positive terminal 2 or a negative terminal 2, that is, the positive and negative terminals 2 are located on two opposite ends of a battery. Alternatively, two electrode lead-out holes 101 may be provided on the top cover plate 1 to mount the positive terminal 2 and the negative terminal 2, that is, the positive and negative terminals 2 are located on a same end of the battery.

To ensure insulation between the terminal 2 and the top cover plate 1, in the prior art, an insulating member made of a PPS material is sleeved on an outer side of the terminal 2. However, during use of the battery, a situation such as thermal runaway may occur, causing an excessively high temperature inside the battery. In this case, the insulating member is heated, and therefore fails to satisfy a demand for insulation performance.

Therefore, in this embodiment, a ceramic supporting ring 3 is arranged between the terminal 2 and the top cover plate 1. The ceramic supporting ring 3 supports the terminal 2, and at least partially surrounds an end of the terminal 2 close to the top cover plate 1, to prevent the terminal 2 from moving toward the top cover plate 1. The ceramic ring is made of a high-temperature ceramic material, which exhibits excellent stability and resistance to melting in a high-temperature environment, while possessing high insulation performance, high mechanical strength, and high hardness. Specifically, the ceramic supporting ring 3 includes a base portion 301 supported between the top cover plate 1 and the terminal 2, and a cylinder portion 302 surrounding a peripheral side of the terminal 2. It should be noted that the expression "wrapping" or "surrounding" herein and in the following test may be completely wrapping or partially wrapping a to-be-wrapped element based on an actual situation.

In addition, a ceramic limiting ring 4 arranged spaced apart from the ceramic supporting ring 3 is sleeved on outside of the terminal 2. The ceramic limiting ring at least partially surrounds an end of the terminal 2 away from the top cover plate 1, to prevent the terminal 2 from moving away from the top cover plate 1. Cooperation between the ceramic limiting ring 4 and the ceramic supporting ring 3 can achieve relatively desirable insulation performance, and can maintain an insulation effect even at a high temperature. In addition, the ceramic supporting ring 3 and the ceramic limiting ring 4 are separately arranged, which can facilitate processing and mounting of the two. The gap left between the two enhances supporting performance thereof.

In some possible embodiments, the terminal 2 includes a columnar body 201 and a flange portion 202 facing the top cover plate 1 that are connected to each other. In addition, the ceramic limiting ring 4 includes a radial limiting portion 401 surrounding a peripheral side of the columnar body 201, to prevent the terminal 2 from moving along a radial direction thereof. The ceramic limiting ring 4 further includes an axial limiting portion 402 surrounding the flange portion 202, to prevent the terminal 2 from moving along an axial direction thereof. In some possible embodiments, an outer dimension of the ceramic limiting ring 4 may be or may not be the same as that of the ceramic supporting ring 3.

In order to fixedly mount the ceramic supporting ring 3, the ceramic limiting ring 4, and the terminal 2 to the top cover plate 1, this embodiment further includes a fixing assembly connected to the top cover plate 1, which at least partially surrounds the ceramic supporting ring 3 and the ceramic limiting ring 4, so as to fix the ceramic supporting ring 3, the ceramic limiting ring 4, and the terminal 2 to the top cover plate 1.

In some possible embodiments, the fixing assembly may include a limiting member 5 and a fixing member 6. The limiting member 5 may be connected to the top cover plate 1 through laser welding or the like, and at least partially surrounds the ceramic supporting ring 3 and the ceramic limiting ring 4, to confine relative positions of the ceramic supporting ring 3, the ceramic limiting ring 4, and the terminal 2 on the top cover plate 1.

To position and mount the fixing assembly, the ceramic supporting ring 3, the ceramic limiting ring 4, and the terminal 2 more effectively, in some possible embodiments, a primary sink 102 having a small diameter and a secondary sink 103 having a large diameter are sequentially provided on a side of the top cover plate 1 facing the terminal 2. That is, the diameter of the primary sink 102 is less than that of the secondary sink 103. The ceramic supporting ring 3 is arranged on a bottom of the primary sink 102.

The limiting member 5 includes an annular substrate 501 arranged on the bottom of the primary sink 102, and an extension 502 extending and wrapping outer peripheral walls of the ceramic supporting ring 3 and the ceramic limiting ring 4. An outer peripheral wall of the annular substrate 501 is connected to an inner side wall of the primary sink 102 through welding. The fixing member 6 is formed through an insulative injection molding process, and has a filling portion filled in a gap between an inner side wall of the secondary sink 103 and an outer peripheral wall of the limiting member 5. The fixing member 6 extends and wraps the limiting member 5 and the ceramic limiting ring 4 from the filling portion thereof to an outer peripheral wall of the terminal 2. In this way, positioning can be provided during mounting of the terminal 2 and a connection structural member, and overall compactness and stability of the battery cover plate structure are enhanced. In addition, the limiting member 5 may be made of a metal material with relatively high strength such as aluminum alloy or steel. These materials have abundant raw material availability, low costs, low welding difficulty, and high welding quality.

In addition, to improve sealing performance of a connection structure of an electrode pole or the terminal 2, a sealing member 7 is further arranged between the terminal 2 and the top cover plate 1. The sealing member 7 includes a cylindrical portion 701 wrapping an inner side wall of the electrode lead-out hole 101, and an annular portion 702 filled between the terminal 2 and the top cover plate 1. In addition, the sealing member 7 may be a gasket structure made of an elastic material having superior compressibility, which can ensure airtightness through compression. A compression amount of the gasket may be ensured through crimping of the limiting member 5 and welding of an end to the top cover plate 1, so that the terminal 2 has excellent sealing performance.

### Embodiment 2

This embodiment provides a lithium battery, which is mainly applied to new energy power battery modules. A plurality of lithium batteries may constitute a large power battery module, to provide electric power for devices such as new energy vehicles.

The lithium battery mainly includes a housing having at least at one open end. A battery core is arranged in the housing. The battery cell cover plate structure with high heat resistance in Embodiment 1 is arranged at the opening of the housing. A connection sheet on an end of the battery core is electrically connected to an electrode pole, to lead out a current.

In the description of the utility model, it should be noted that orientation or position relationships indicted by terms such as "front", "rear", "left", "right", "upper", "lower", "top", "bottom", "inner", and "outer" are based on orientation or position relationships shown in the drawings, are merely used to facilitate the description of the utility model and simplify the description, instead of indicating or implying that the indicated apparatus or element needs to have particular orientations or be constructed and operated in particular orientations, and therefore cannot be construed as a limitation on the utility model.

In the description of the utility model, it should be noted that, unless otherwise specified or defined, terms such as "mount", "connect", and "connection" should be understood in a broad sense. For example, the connection may be a fixed connection, a detachable connection, or an integral connection; or may be a mechanical connection or an electrical connection; or may be a direct connection, an indirect connection through an intermediary, or internal communication between two elements. A person of ordinary skill in the art may understand specific meanings of the terms in the utility model based on specific situations.

The protection scope of the utility model is defined only by the claims. Benefiting from the teachings of the utility model, a person skilled in the art may easily understand that alternative structures of the structures disclosed in the utility model may be used as feasible alternative implementations, and the implementations disclosed in the utility model may be combined to generate new implementations, which also fall within the scope of the appended claims.

## Claims

1. A battery cell cover plate structure with high heat resistance, comprising a top cover plate (1) provided with an electrode lead-out hole (101), and further comprising:
a terminal (2), located on a side of the top cover plate (1) and covering the electrode lead-out hole (101);
a ceramic supporting ring (3), supported between the terminal (2) and the top cover plate (1), and at least partially surrounding an end of the terminal (2) close to the top cover plate (1) to prevent the terminal (2) from moving toward the top cover plate (1);
a ceramic limiting ring (4), arranged spaced apart from the ceramic supporting ring (3), and at least partially surrounding an end of the terminal (2) away from the top cover plate (1) to prevent the terminal (2) from moving away from the top cover plate (1); and
a fixing assembly, connected to the top cover plate (1), and at least partially surrounding the ceramic supporting ring (3) and the ceramic limiting ring (4) to fix the ceramic supporting ring (3), the ceramic limiting ring (4), and the terminal (2) to the top cover plate (1).

2. The battery cell cover plate structure with high heat resistance according to claim 1, wherein the ceramic supporting ring (3) comprises a base portion (301) supported between the top cover plate (1) and the terminal (2), and a cylinder portion (302) surrounding a peripheral side of the terminal (2).

3. The battery cell cover plate structure with high heat resistance according to claim 1, wherein the terminal (2) comprises a columnar body (201) and a flange portion (202) facing the top cover plate (1); and the ceramic limiting ring (4) comprises a radial limiting portion (401) surrounding a peripheral side of the columnar body (201) and an axial limiting portion (402) surrounding the flange portion (202).

4. The battery cell cover plate structure with high heat resistance according to claim 1, wherein the fixing assembly comprises:
a limiting member (5), wherein the limiting member (5) is connected to the top cover plate (1), and at least partially surrounds the ceramic supporting ring (3) and the ceramic limiting ring (4) to confine relative positions of the ceramic supporting ring (3), the ceramic limiting ring (4), and the terminal (2) on the top cover plate (1); and
a fixing member (6), wherein the fixing member (6) is connected to the top cover plate (1), and at least partially surrounds the limiting member (5) to fix the limiting member (5), the ceramic supporting ring (3), the ceramic limiting ring (4), and the terminal (2) to the top cover plate (1).

5. The battery cell cover plate structure with high heat resistance according to claim 4, wherein a primary sink (102) having a small diameter and a secondary sink (103) having a large diameter are sequentially provided on a side of the top cover plate (1) facing the terminal (2), and the ceramic supporting ring (3) is arranged on a bottom of the primary sink (102).

6. The battery cell cover plate structure with high heat resistance according to claim 5, wherein the limiting member (5) comprises an annular substrate (501) arranged on the bottom of the primary sink (102), and an extension (502) extending and wrapping outer peripheral walls of the ceramic supporting ring (3) and the ceramic limiting ring (4), and an outer peripheral wall of the annular substrate (501) is connected to an inner side wall of the primary sink (102) through welding.

7. The battery cell cover plate structure with high heat resistance according to claim 5, wherein the fixing member (6) is formed through an insulative injection molding process, and has a filling portion filled in a gap between an inner side wall of the secondary sink (103) and an outer peripheral wall of the limiting member (5).

8. The battery cell cover plate structure with high heat resistance according to claim 7, wherein the fixing member (6) extends and wraps the limiting member (5) and the ceramic limiting ring (4) from the filling portion thereof to an outer peripheral wall of the terminal (2).

9. The battery cell cover plate structure with high heat resistance according to any one of claims 1 to 8, wherein a sealing member (7) is further arranged between the terminal (2) and the top cover plate (1), and the sealing member (7) comprises a cylindrical portion (701) wrapping an inner side wall of the electrode lead-out hole (101), and an annular portion (702) filled between the terminal (2) and the top cover plate (1).

10. A lithium battery, comprising a housing having at least one open end, wherein a battery core is arranged in the housing, and the battery cell cover plate structure with high heat resistance according to any one of claims 1 to 9 is arranged at the opening of the housing.
